# EUROPÄISCHE PATENTSCHRIFT

(11) **EP 1 616 737 B1**
(45) Veröffentlichungstag und Bekanntmachung des Hinweises auf die Patenterteilung: **10.02.2010**
(21) Anmeldenummer: 05008928.3
(22) Anmeldetag: 22.04.2005
(51) Int. Cl.: B60J 7/00

(54) **Führungsschiene für einen Rollo eines Schiebedachsystems**
Guiding rail for a roller blind of a sliding roof system
Rail de guidage pour un store à enrouleur d'un toit ouvrant

(30) Priorität: 14.07.2004 DE 102004033982
(43) Veröffentlichungstag der Anmeldung: 18.01.2006
(73) Patentinhaber: ArvinMeritor GmbH, 63128 Dietzenbach (DE)
(72) Erfinder: Grimm, Rainer, 60299 Frankfurt (DE); Böhm, Horst, 60599 Frankfurt (DE); Becher, Thomas, 63110 Rodgau (DE); Biewer, Christian, 64839 Münster (DE)
(74) Vertreter: Prinz & Partner

(56) Entgegenhaltungen:
- EP-A- 1 112 876
- DE-C1- 19 955 710
- FR-A- 2 718 485
- GB-A- 455 874

## Beschreibung

Die Erfindung betrifft eine Führungsschiene für ein Rollo eines Schiebedachsystems für ein Kraftfahrzeug.

Ein solches Rollo kann unterhalb einer Öffnung in einem Fahrzeugdach angebracht sein, um die Öffnung je nach Wunsch der Fahrzeuginsassen mehr oder weniger abzudecken. Wenn die Öffnung freigegeben sein soll, ist das Rollo auf einer Wickelachse aufgewickelt. Von dieser kann es abgezogen werden, so daß es die Öffnung abdeckt. Damit das Rollo, wenn es sich unterhalb der Öffnung im Fahrzeugdach befindet, nicht in den Fahrzeuginnenraum hinein durchhängt, sind die Längsränder des Rollos in Führungsschienen aufgenommen, so daß es quer zur Verschieberichtung gespannt gehalten werden kann.

EP 1 112 87 (WEBASTO VEHICLE SYSTEMS) beschreibt ein solches Rollo.

Der gewünschte Abstand zwischen den Führungsschienen muß mit sehr engen Toleranzen eingehalten werden. Falls der Abstand zu gering ist, hängt das Rollo zwischen den beiden Führungsschienen zum Fahrzeuginnenraum hin durch. Dies ist aus optischen Gründen unerwünscht. Falls der Abstand zwischen den Führungsschienen zu groß ist, kann das Rollo entweder gar nicht in den Führungsschienen verschoben werden oder nur unter Überwindung von sehr hohen Reibungskräften; dies schränkt die Bedienbarkeit und Lebensdauer ein.

Die Aufgabe der Erfindung besteht darin, eine Führungsschiene für ein Rollo dahingehend weiterzubilden, daß die Anforderungen an die einzuhaltenden Toleranzen bei der Herstellung und/oder Montage der Führungsschiene geringer sind.

Zu diesem Zweck ist erfindungsgemäß eine Führungsschiene für ein Rollo eines Schiebedachsystems vorgesehen, mit einem Halteabschnitt, mittels dem die Führungsschiene an einem Fahrzeug befestigt werden kann, einem Führungsabschnitt, in dem das Rollo aufgenommen werden kann, und einem elastisch federnden Verbindungsabschnitt, der zwischen dem Halteabschnitt und dem Führungsabschnitt angeordnet ist. Die Erfindung beruht auf dem Grundgedanken, einen automatischen Toleranzausgleich in der Form des elastisch federnden Verbindungsabschnittes vorzusehen. Dies ermöglicht, die beiden Führungsschienen so auszubilden und anzuordnen, daß der Abstand zwischen den beiden Führungsabschnitten für das Rollo bei jeder Toleranzlage größer ist als eigentlich notwendig. Wenn nun das Rollo in die Führungsabschnitte eingeschoben wird, werden die beiden Führungsabschnitte näher zueinandergezogen; dabei gibt der Verbindungsabschnitt elastisch nach, ohne daß hohe Reibungskräfte auftreten. Es ist in jedem Fall gewährleistet, daß das Rollo immer straff gespannt gehalten wird.

Vorzugsweise ist vorgesehen, daß sowohl der Halteabschnitt als auch der Führungsabschnitt einstückig mit dem Verbindungsabschnitt ausgeführt sind, beispielsweise als Spritzgußteil aus Kunststoff. Die Eigenelastizität des Kunststoffs gewährleistet in Kombination mit einer geeigneten Wandstärke die notwendige elastische Verformbarkeit. Alternativ können extrudierte Profile aus Kunststoff oder eine Aluminiumlegierung verwendet werden.

Vorteilhafte Ausführungsformen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 eine perspektivische Ansicht eines Fahrzeugdaches mit einem erfindungsgemäßen Rollo;
- Figur 2 eine schematische Seitenansicht eines erfindungsgemäßen Rollos; und
- Figur 3 schematisch einen Schnitt entlang der Ebene III-III von Figur 1.

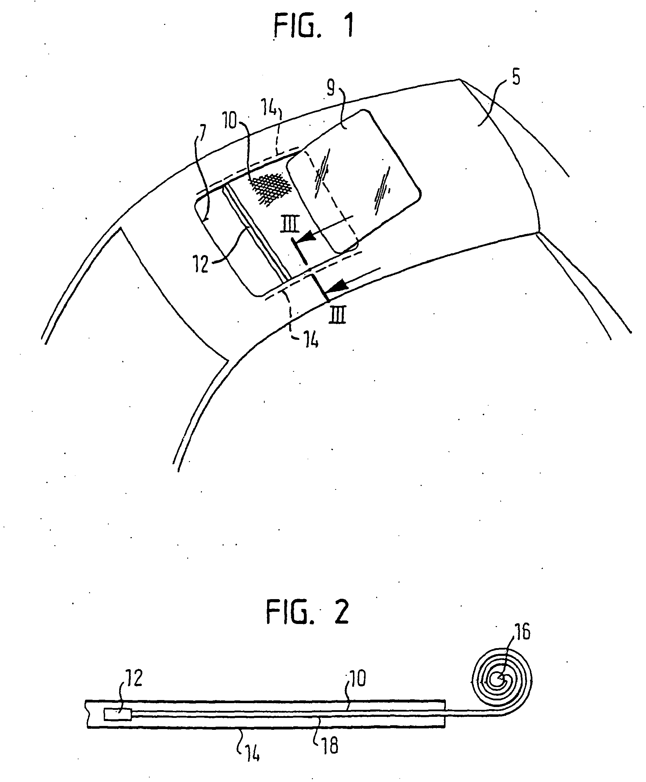

In Figur 1 ist ein Fahrzeugdach 5 zu sehen, welches mit einer Öffnung 7 versehen ist. Der Öffnung 7 ist ein Deckel 9 eines Schiebedachsystems zugeordnet. Der Deckel 9 kann zwischen einer geschlossenen Stellung, in welcher er die Öffnung 7 verschließt, und einer in Figur 1 gezeigten, geöffneten Stellung verstellt werden. Unterhalb des Deckels 9 und auch unterhalb der Öffnung 7 ist ein Rollo 10 angeordnet. Das Rollo 10 kann, bezogen auf das Fahrzeug, manuell oder von einem Motor angetrieben nach vorne und hinten verschoben werden. Wenn das Rollo 10 vollständig nach hinten geschoben ist, ist die Öffnung 7 vollständig freigegeben. Frischluft und Sonnenlicht haben dann freien Zugang zum Fahrzeuginnenraum. Wenn das Rollo 10 vollständig nach vorne geschoben ist, ist die Öffnung 7 vom Rollo abgedeckt. Frischluft und Sonnenlicht können somit nur in begrenztem Umfang in den Fahrzeuginnenraum gelangen.

Das Rollo 10 besteht aus einem flexiblen Material, beispielsweise Stoff oder einer Kunststofffolie. An seinem vorderen Rand ist ein Spriegel 12 vorgesehen, an dem ein Fahrzeuginsasse angreifen kann, um das Rollo nach vorne oder hinten zu verschieben. Seitlich entlang der Öffnung 7 erstrecken sich zwei Führungsschienen 14, in denen die beiden Längsränder des Rollos, also in der Fahrzeuglängsrichtung betrachtet der rechte und der linke Rand des Rollos 10, aufgenommen sind. Im Bereich des hinteren Endes der Öffnung 7 befindet sich eine Wickelachse 16, auf der das Rollo 10 aufgewickelt werden kann. Die Wickelachse 16 ist üblicherweise von einer Feder beaufschlagt, so daß das Rollo 10 automatisch auf der Wickelachse 16 aufgenommen wird, wenn der Spriegel 12 nach hinten verschoben wird.

Entlang den Längsrändern des Rollos 10, also in dem den Führungsschienen 14 zugeordneten Bereich, ist jedes Rollo mit einem Führungselement 18 versehen, das als dünner Metall- oder Kunststoffstreifen ausgeführt ist.

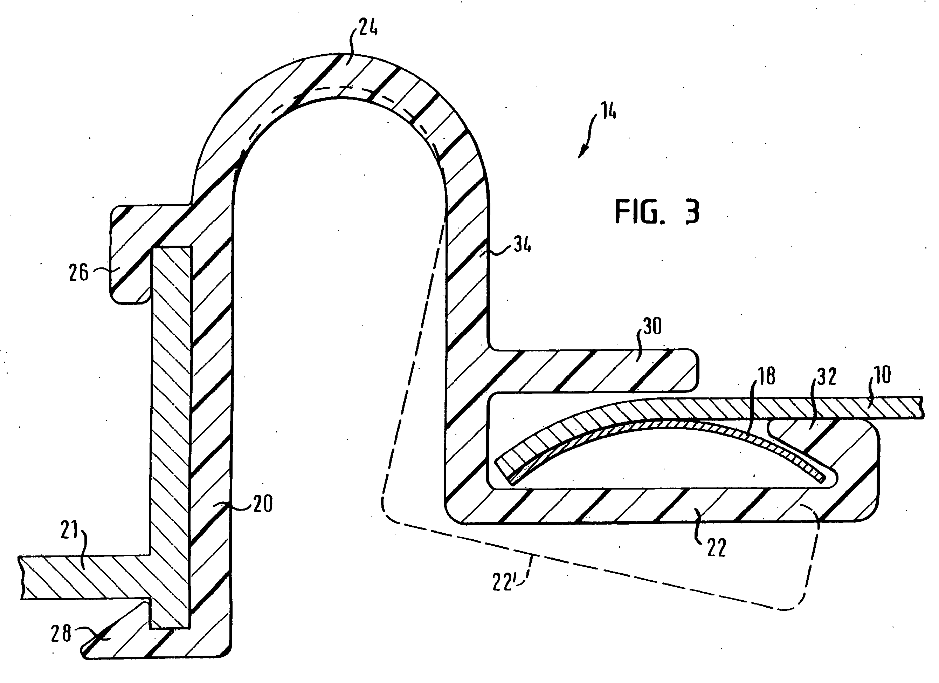

Jede Führungsschiene 14 (siehe insbesondere Figur 3) weist einen Halteabschnitt 20, einen Führungsabschnitt 22 und einen Verbindungsabschnitt 24 auf. Der Halteabschnitt 20 dient zur Befestigung der Führungsschiene 14 am Fahrzeugdach, beispielsweise an einem Randabschnitt einer Schiene 21 zur Führung des Deckels 9. Der Halteabschnitt 20 weist hier eine Halteleiste 26 und einen Rasthaken 28 auf, der es ermöglicht, die Führungsschiene mit geringem Aufwand an der Schiene 21 zu montieren.

Der Führungsabschnitt 22 dient zur Aufnahme und Führung des Führungselementes 18 des Rollos. Er ist zu diesem Zweck mit einem oberen Führungssteg 30 und einem nach innen gerichteten Führungssteg 32 versehen.

Der Verbindungsabschnitt 24 erstreckt sich zwischen dem Halteabschnitt 20 und dem Führungsabschnitt 22 und ist hier mit einem halbkreisförmigen Querschnitt am bezüglich Figur 3 oberen Ende und einem sich zum Führungsabschnitt 22 hin erstreckenden Verbindungssteg 34 versehen. Der Verbindungsabschnitt 24 ist so ausgeführt, daß im Ausgangszustand der Halteabschnitt 20 und der Führungsabschnitt 22 sich näher aneinander befinden (siehe die gestrichelt angedeutete Lage 22' des Führungsabschnittes) als in dem Zustand, wenn das Rollo 10 sich zwischen den beiden Führungsschienen befindet. Wenn also das Rollo 10 von der Wickelachse 16 abgezogen und in den Führungsabschnitten 22 nach vorne verstellt wird, werden die einander gegenüberliegenden Führungsabschnitte 22 aus ihrer Ausgangslage näher zueinander hingezogen, wodurch das Rollo straff gespannt gehalten wird. Aufgrund der Elastizität der Verbindungsabschnitte der beiden Führungsschienen 14 verbleiben die dabei auf das Rollo 10 ausgeübten Spannkräfte auf einem vergleichsweise niedrigen Niveau, so daß nur geringe Reibungskräfte zwischen den Führungselementen 18 des Rollos 10 und den Führungsabschnitten 22 der Führungsschienen 14 auftreten. Die von den Verbindungsabschnitten ausgeühben Federkräfte können zum einen durch die Geometrie und den Werkstoff eingestellt werden. Zum anderen kann durch geeignete Auswahl der Wandstärke auf die Federkraft eingewirkt werden, beispielsweise durch lokale Verringerungen, die in Figur 3 gestrichelt angedeutet sind.

### Bezugszeichenliste

- 5: Fahrzeugdach
- 7: Öffnung
- 9: Deckel
- 10: Rollo
- 12: Spriegel
- 14: Führungsschiene
- 16: Wickelachse
- 18: Führungselement
- 20: Halteabschnitt
- 21: Schiene
- 22: Führungsabschnitt
- 24: Verbindungsabschnitt
- 26: Halteleiste
- 28: Rasthaken
- 30: Führungssteg
- 32: Führungssteg
- 34: Verbindungssteg

## Patentansprüche

1. Führungsschiene (14) für ein Rollo (10) eines Schiebedachsystem, mit einem Halteabschnitt (20), mittels dem die Führungsschiene (14) an einem Fahrzeug befestigt werden kann, einem Führungsabschnitt (22), in dem das Rollo (10) aufgenommen werden kann, **gekennzeichnet durch** einen elastisch federnden Verbindungsabschnitt (24), der zwischen dem Halteabschnitt (20) und dem Führungsabschnitt (22) angeordnet ist.

2. Führungsschiene nach Anspruch 1, **dadurch gekennzeichnet, daß** der Verbindungsabschnitt (24) einstückig mit dem Halteabschnitt (20) ausgeführt ist.

3. Führungsschiene nach Anspruch 1 oder Anspruch 2, **dadurch gekennzeichnet, daß** der Verbindungsabschnitt (24) einstückig mit dem Führungsabschnitt (22) ausgeführt ist.

4. Führungsschiene nach einem der vorhergehenden Ansprüche, **dadurch gekennzeichnet, daß** der Verbindungsabschnitt (24) einen gekrümmten Querschnitt hat.

5. Führungsschiene nach einem der vorhergehenden Ansprüche, **dadurch gekennzeichnet, daß** der Verbindungsabschnitt (24) einen U-förmigen Querschnitt hat.

6. Führungsschiene nach einem der vorhergehenden Ansprüche, **dadurch gekennzeichnet, daß** sie aus Kunststoff besteht.

7. Führungsschiene nach einem der vorhergehenden Ansprüche, **dadurch gekennzeichnet, daß** sie ein extrudiertes Profilteil ist.

8. Baugruppe bestehend aus zwei Führungsschienen (14) nach einem der vorhergehenden Ansprüche und einen Rollo (10), **dadurch gekennzeichnet, daß** die Führungsabschnitte (22) der beiden Führungsschienen (14) einander gegenüberliegend angeordnet sind und daß die beiden Führungsabschnitte (22), wenn das Rollo (10) nicht in die Führungsabschnitte (22) eingezogen ist, einen größeren Abstand voneinander haben als in einem Zustand, in welchem das Rollo (10) in die beiden Führungsabschnitte (22) eingezogen ist.

## Claims

1. Guiding rail (14) for a roller blind (10) of a sliding roof system, having a retaining section (20) by means of which the guiding rail (14) can be fastened to a vehicle, and a guiding section (22) in which the roller blind (10) can be held, **characterized by** an elastically resilient connecting section (24) arranged between the retaining section (20) and the guiding section (22).

2. Guiding rail according to Claim 1, **characterized in that** the connecting section (24) is formed in one piece with the retaining section (20).

3. Guiding rail according to Claim 1 or Claim 2, **characterized in that** the connecting section (24) is formed in one piece with the guiding section (22).

4. Guiding rail according to one of the preceding claims, **characterized in that** the connecting section (24) has a curved cross section.

5. Guiding rail according to one of the preceding claims, **characterized in that** the connecting section (24) has a U-shaped cross section.

6. Guiding rail according to one of the preceding claims, **characterized in that** said guiding rail is composed of plastic.

7. Guiding rail according to one of the preceding claims, **characterized in that** said guiding rail is an extruded profiled part.

8. Assembly composed of two guiding rails (14) according to one of the preceding claims and a roller blind (10), **characterized in that** the guiding sections (22) of the two guiding rails (14) are arranged opposite one another and **in that** the two guiding sections (22) have a greater spacing to one another when the roller blind (10) is not pulled into the guiding sections (22) than in a state in which the roller blind (10) is pulled into the two guiding sections (22).

## Revendications

1. Rail de guidage (14) pour un store à enrouleur (10) d'un système de toit ouvrant, comprenant une portion de retenue (20) au moyen de laquelle le rail de guidage (14) peut être fixé à un véhicule, une portion de guidage (22) dans laquelle le store à enrouleur (10) peut être reçu, **caractérisé par** une portion de connexion (24) à ressort élastique, qui est disposée entre la portion de retenue (20) et la portion de guidage (22).

2. Rail de guidage selon la revendication 1, **caractérisé en ce que** la portion de connexion (24) est réalisée d'une seule pièce avec la portion de retenue (20).

3. Rail de guidage selon la revendication 1 ou 2, **caractérisé en ce que** la portion de connexion (24) est réalisée d'une seule pièce avec la portion de guidage (22).

4. Rail de guidage selon l'une quelconque des revendications précédentes, **caractérisé en ce que** la portion de connexion (24) a une section transversale courbe.

5. Rail de guidage selon l'une quelconque des revendications précédentes, **caractérisé en ce que** la portion de connexion (24) a une section transversale en forme de U.

6. Rail de guidage selon l'une quelconque des revendications précédentes, **caractérisé en ce qu'**il se compose de plastique.

7. Rail de guidage selon l'une quelconque des revendications précédentes, **caractérisé en ce qu'**il s'agit d'une pièce profilée extrudée.

8. Module constitué de deux rails de guidage (14) selon l'une quelconque des revendications précédentes, et d'un store à enrouleur (10), **caractérisé en ce que** les portions de guidage (22) des deux rails de guidage (14) sont disposées en regard l'une de l'autre et **en ce que** les deux portions de guidage (22), lorsque le store à enrouleur (10) n'est pas rentré dans les portions de guidage (22), présente un plus grand espacement l'une de l'autre que dans un état dans lequel le store à enrouleur (10) est rentré dans les deux portions de guidage (22).
